# EUROPÄISCHE PATENTSCHRIFT

(11) **EP 3 145 679 B1**
(45) Veröffentlichungstag und Bekanntmachung des Hinweises auf die Patenterteilung: **14.11.2018**
(21) Anmeldenummer: 15715220.8
(22) Anmeldetag: 02.04.2015
(51) Int. Cl.: B25J 5/00, B25J 17/00, B25J 18/00, B25J 19/00

(54) **GELENKANORDNUNG MIT ZUMINDEST EINER ANGETRIEBENEN ACHSE**
JOINT ARRANGEMENT HAVING AT LEAST ONE DRIVEN AXIS
ENSEMBLE D'ARTICULATION COMPRENANT AU MOINS UN ESSIEU ENTRAÎNÉ

(30) Priorität: 20.05.2014 DE 102014107071
(43) Veröffentlichungstag der Anmeldung: 29.03.2017
(73) Patentinhaber: Fraunhofer Gesellschaft zur Förderung der angewandten Forschung e.V., 80686 München (DE)
(72) Erfinder: FRÖHLICH, Tim, 71229 Leonberg (DE)
(74) Vertreter: Mammel und Maser
(86) Internationale Anmeldenummer: PCT/EP2015/057390
(87) Internationale Veröffentlichungsnummer: WO 2015/176865

(56) Entgegenhaltungen:
- EP-A1- 0 115 728
- DE-A1-102013 205 008
- FR-A1- 2 791 294
- JP-A- 2009 279 700

## Beschreibung

Die Erfindung betrifft eine Gelenkanordnung mit zumindest einer angetriebenen Achse, insbesondere zur Ansteuerung einer Bewegung eines Roboters.

In der Robotik werden immer mehr sogenannte mobile Plattformen beziehungsweise Roboter eingesetzt. Diese müssen bezüglich deren Bewegungen und Handhabungsaufgaben an unterschiedliche Umgebungen angepasst und aufgebaut werden. Zur Durchführung der Handhabungsaufgaben weisen diese Roboter Gelenke auf, durch welche beispielsweise Greifelemente gegenüber einem Körperelement und einem Fußteil bewegt werden können. Üblicherweise werden Gelenke, wie Schwenk-Neige-Einheiten oder Lineareigenachsen, eingesetzt. Dies ist beispielsweise aus der JP 2005 014097 A, der DE 10 2004 002 416 A1 und der DE 37 90 743 A1 bekannt. Diese haben jedoch den Nachteil, dass sie keine natürliche runde Bewegung ausführen können. Darüber hinaus weisen beispielsweise Linearachsen das Problem auf, dass bei einem Roboter mit einer Neigung des Oberbaus gegenüber einem Sockel durch Linearachsen eine Schwerpunktverlagerung auftritt. Die Neigung wird deshalb zumeist eingegrenzt, jedoch geht damit einher, dass diese Roboter nur bedingt für Manipulationen am Boden einsetzbar sind.

Des Weiteren werden Kugelgelenke eingesetzt, wie dies beispielsweise aus der US 2010/0037720 A1 und der WO 2011/105 400 A1 bekannt ist, um diese im Lager zu fixieren. Dadurch entsteht kein Vorteil bezüglich des Problems der Schwerpunktverlagerung bei einem Verbeugen eines Oberteils gegenüber einem Sockel.

Aus der JP 2009 279 700 A ist eine Gelenkanordnung für einen Mehrachsenroboter für Bearbeitungs- und/oder Montageaufgaben bekannt. Diese Gelenkanordnung umfasst ein erstes Basiselement, an dem ein erstes Drehelement vorgesehen ist. Dieses erste Drehelement nimmt ein zweites Drehelement auf, welches getrennt von der ersten Drehachse um eine zweite Drehachse schwenkbar ist. Das zweite Drehelement weist eine dritte Drehachse getrennt von der zweiten Drehachse auf, um welche ein zweites Basiselement zum zweiten Drehelement drehbar ist. Die zweite Drehachse weist einen Achsversatz zur ersten Drehachse auf und ist zur Drehachse geneigt.

Aus der DE 10 2013 205 008 A1 ist eine Kinematik eines Roboterarms bekannt. Diese Kinematik umfasst einen ersten Gelenkarm mit einer ersten Schwenkachse und gegenüberliegend mit einer zweiten Schwenkachse. An der zweiten Schwenkachse ist ein zweiter Hebelarm schwenkbar gelagert, der wiederum gegenüberliegend eine dritte Schwenkachse aufweist. Alle drei Schwenkachsen kreuzen sich in einem Punkt.

Aus der EP 0 115 728 A1 ist des Weiteren eine Gelenkarmanordnung zur Aufnahme einer Brennerdüse bekannt, welche einen analogen Aufbau zur DE 10 2013 205 008 A1 aufweist.

Aus der FR 2 791 294 A1 geht des Weiteren eine Anordnung zur Aufnahme eines Werkzeuges hervor, welches um eine feststehende Achse drehbar ist, welche wiederum geneigt zur feststehenden Drehachse eine weitere Drehachse aufnimmt, an der das Werkzeug wiederum drehbar gelagert ist.

Der Erfindung liegt die Aufgabe zugrunde, eine Gelenkanordnung vorzuschlagen, welche eine verringerte Schwerpunktverlagerung gegenüber einer Mittelachse der Gelenkanordnung ermöglicht.

Diese Aufgabe wird durch eine Gelenkanordnung gelöst, bei welcher ein erstes Basiselement ein erstes Drehelement aufnimmt und das erste Drehelement um eine erste Drehachse drehbar gelagert ist, das erste Drehelement eine zweite Drehachse getrennt von dem ersten Drehelement aufnimmt, um welche ein zweites Drehelement schwenkbar an dem ersten Drehelement gelagert ist. Des Weiteren weist das zweite Drehelement eine dritte Drehachse getrennt von der zweiten Drehachse auf, um welche ein zweites Basiselement zum zweiten Drehelement drehbar ist. Die zweite Drehachse weist zur ersten Drehachse einen Achsversatz auf und ist zur ersten Drehachse derart geneigt, dass die erste und die zweite Drehachse einen Schnittpunkt aufweisen, der außerhalb der Gelenkanordnung liegt. Dadurch wird bei der Ansteuerung einer Neigebewegung oder einer Beugebewegung zwischen dem ersten und zweiten Basiselement der Schwerpunkt nur geringfügig oder gar nicht aus der ersten beziehungsweise dritten Drehachse der Gelenkanordnung heraus verlagert. Durch den Achsversatz zwischen der ersten und der zweiten Drehachse sowie die Neigung der zweiten Drehachse zur ersten Drehachse wird ein Schnittpunkt zwischen der ersten und zweiten Drehachse geschaffen, der außerhalb der Gelenkanordnung liegt. Dadurch vergrößert sich der Bereich in dem sich ein Systemschwerpunkt intrinsisch stabil bewegen kann.

Bei dieser erfindungsgemäßen Ausführungsform wird ausgehend von dem ersten Basiselement durch die drehbare Anordnung des ersten Drehelementes um die erste Drehachse und des zweiten Drehelements um die zweite Drehachse die maximale Neigung herbei geführt, wobei die Drehung um die dritte Drehachse lediglich zur Orientierung des weiteren Aufbaus auf dem zweiten Basiselement dient. Dadurch wird eine Neigung eingeleitet, bei welcher aufgrund des Achsversatzes bei einer Kippbewegung in die eine Richtung eine Schwerpunktverlagerung in die andere Richtung erfolgt und somit ein Ausgleich um die Summe der Achsversätze zwischen der ersten und zweiten Achse geschaffen ist.

Das erste Drehelement ist als Pfannenkörper und das zweite Drehelement als Kugelsegmentkörper ausgebildet, welche jeweils mit einem Basiselement in Verbindung stehen. Dadurch wird nicht nur eine stabile Anordnung geschaffen, sondern auch ermöglicht, dass das zweite Drehelement im Umfang des Achsversatzes zwischen der zweiten und der dritten Drehachse entlang einer Kugeloberfläche verfahrbar ist.

Bevorzugt ist durch die drehbare Anordnung des zweiten Drehelementes zum ersten Drehelement ein Arbeitsraum gebildet, innerhalb dem die Drehbewegung des ersten und zweiten Drehelementes liegt und der Schnittpunkt der Drehachsen von dem ersten und zweiten Drehelement außerhalb dieses Arbeitsraumes liegt. Auch durch diese Maßgabe kann der Schwerpunkt des zweiten Basiselemente beziehungsweise eines daran angeordneten Oberbaus nur geringfügig oder gar nicht gegenüber der ersten Drehachse der Gelenkanordnung heraus verlagert sein.

Nach einer bevorzugten Ausgestaltung der Erfindung ist vorgesehen, dass ein weiterer Achsversatz zwischen der zweiten Drehachse und der dritten Drehachse kleiner oder größer als der Achsversatz zwischen der ersten und der zweiten Drehachse ist. Vorzugsweise ist der jeweilige Neigungswinkel gleich. In diesem Fall wird die dritte Drehachse parallel zur ersten Drehachse ausgerichtet. Auch eine solche Ausführungsform ermöglicht eine verringerte Schwerpunktverlagerung.

Alternativ kann vorgesehen sein, dass ein weiterer Achsversatz zwischen der zweiten Drehachse und der dritten Drehachse dem Achsversatz zwischen der ersten und der zweiten Drehachse entspricht. Vorzugsweise ist auch der jeweilige Neigungswinkel gleich. In diesem Fall ist die dritte Drehachse kollinear zur ersten Drehachse ausgerichtet. Dies ermöglicht eine weitere Optimierung für eine geringfügige Verlagerung des Schwerpunkts aus dem Mittelpunkt bei der Ansteuerung einer Neige- oder einer Beugebewegung.

Bevorzugt ist die zweite Drehachse zur ersten Drehachse in einem Neigungswinkel von 50°, insbesondere von 30° oder weniger, geneigt. Dadurch kann einerseits eine hohe Standfestigkeit und andererseits die Durchführung von Manipulationen am Boden mit einem solchen Roboter erreicht werden. Die maximale Neigung des Gelenks entspricht dabei der Summe der Neigungswinkel zwischen den Drehachsen.

Bevorzugt ist ein Radius des Kugelsegmentkörpers an den Radius des Pfannenkörpers angepasst. Insbesondere ist dieser insoweit angepasst, dass zwischen dem Kugelsegmentkörper und dem Pfannenkörper ein geringer Spalt gegeben ist, so dass der Kugelsegmentkörper um die zweite Drehachse frei schwenkbar zum Pfannenkörper gelagert ist.

Zur Ansteuerung der Gelenkanordnung ist jede Drehachse durch einen separaten Motor angetrieben. Dadurch kann eine individuelle Ansteuerung und Ausrichtung des zweiten Basiselements zum ersten Basiselement oder umgekehrt erfolgen.

Für jede Drehachse ist bevorzugt eine Drehbewegung aus einer Nullposition heraus um einen Winkel von +/- 360° oder weniger ansteuerbar. Dadurch wird ein Maximum an Flexibilität und Ausrichtung im Raum erzielt.

Alternativ kann vorgesehen sein, dass für die Drehbewegung der Drehelemente in den Drehachsen Schleifringe vorgesehen sind, welche eine endlose Drehbarkeit der Drehelemente und/oder Basiselemente ermöglichen.

Die jeweilige Drehposition der Drehelemente zueinander oder zu den Basiselementen wird mittels eines Sensors, insbesondere eines Absolutwertgebers, erfasst. Dadurch wird auch bei einem Stromausfall für die Ansteuerung der Gelenkanordnung eine Erkennung der Positionierung ermöglicht. Ausgehend von einer Ausgangsposition ist die jeweils eingenommene Neigeposition zu erkennen, so dass eine Ansteuerung wieder zurück in eine Ausgangsposition möglich ist.

Bevorzugt sind das erste und zweite Basiselement als eine Grundplatte oder ein Anschlussflansch ausgebildet. Dadurch ist eine flexible Anpassung an verschiedene Einbausituationen und Einbaupositionen ermöglicht.

Die Drehachsen sind bevorzugt als Hohlachsen ausgebildet, so dass eine Kabeldurchführung ermöglicht ist, um beispielsweise ausgehend von einem ersten Basiselement, welches mit einem Sockelelement fest verbunden ist, die weiteren Antriebe für die Drehachsen zu versorgen. Des Weiteren ist an dem zweiten Basiselement bevorzugt ein Oberbau vorgesehen, und ein Schwerpunkt des Oberbaus liegt im Schnittpunkt der ersten und zweiten Drehachse. Durch eine solche Ausgestaltung wird eine besonders verkippsichere Anordnung geschaffen.

Gemäß einer ersten alternativen Ausführungsform ist das erste Basiselement als eine Montageplatte ausgebildet und umfasst einen Motor, welcher das erste Drehelement, das mit einem Lager zur Montageplatte drehbar gelagert ist, antreibt. Dadurch ist die Gelenkanordnung an viele Grundgestelle, Unterbauten oder dergleichen in einfacher Weise montierbar, so dass ausgehend hiervon beispielsweise mit einem auf dem zweiten Basiselement angeordneten Oberbau die entsprechenden Handhabungen erzielt werden können.

Alternativ kann das erste Basiselement als eine mobile Plattform ausgebildet sein, an welcher das erste Drehelement feststehend angeordnet ist. Die mobile Plattform kann um ihre eigene Achse drehbar angetrieben werden, so dass diese Drehachse gleichzeitig die Drehachse des ersten Drehelementes bildet.

Des Weiteren weist die mobile Plattform bevorzugt ein Fahrwerk auf, welches mit einem Motor verfahrbar angetrieben ist und Akkumulatoren für die Motoren der Drehachse der Drehelemente und Basiselemente und den Motor des Fahrwerks aufnimmt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht einer Ausführungsform der Gelenkanordnung in einer Ausgangsposition,
Figur 2 eine schematische Anordnung der erfindungsgemäßen Gelenkanordnung,
Figur 3 eine schematische Schnittansicht der Gelenkanordnung gemäß Figur 1 in einer Neigeposition,
Figur 4a eine schematische Ansicht eines Roboters in einer Ausgangsposition,
Figur 4b eine schematische Schnittansicht des Roboters gemäß Figur 4a,
Figur 5a eine perspektivische Ansicht eines schematisch dargestellten Roboters in einer Neigeposition,
Figur 5b eine schematische Schnittansicht der Figur 5a, und
Figur 6 eine schematische Seitenansicht einer alternativen Ausführungsform zu Figur 1.

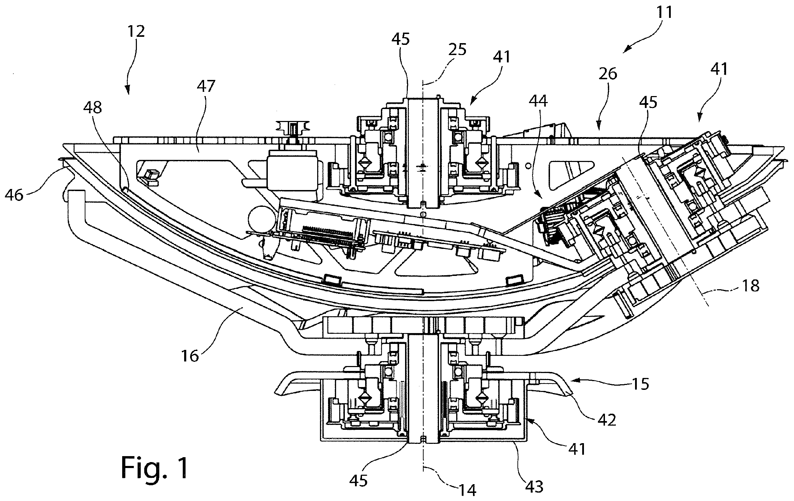

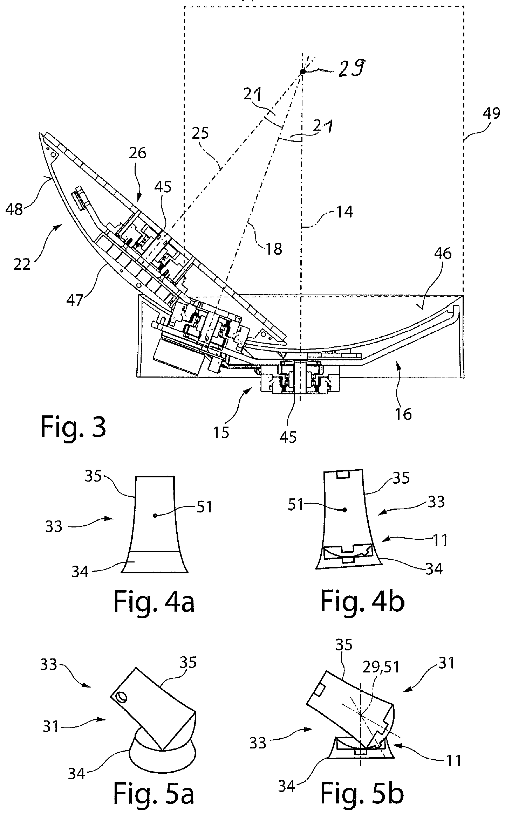

In Figur 1 ist eine schematische Schnittansicht einer Ausführungsform einer Gelenkanordnung 11 in einer Ausgangsposition 12 beziehungsweise Nullposition dargestellt. Die Figur 3 zeigt die Gelenkanordnung 11 in einer Neigeposition. Diese Gelenkanordnung 11 umfasst eine erste Drehachse 14, welche fest an einem ersten Basiselement 15 angeordnet ist. Durch diese erste Drehachse 14 wird ein erstes Drehelement 16 schwenkbar um die erste Drehachse 14 zum Basiselement 15 aufgenommen.

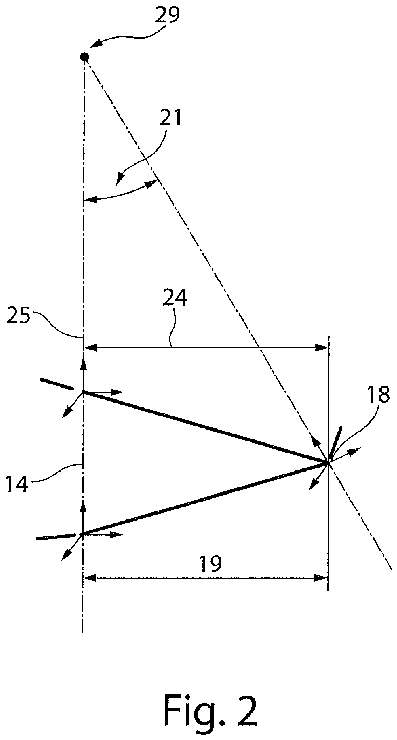

Das erste Drehelement 16 nimmt eine zweite Drehachse 18 auf. Diese ist zur ersten Drehachse 14 mit einem Achsversatz 19 (Figur 2) zur ersten Drehachse 14 angeordnet und gegenüber der ersten Drehachse 14 um einen Neigungswinkel 21 geneigt. Um die zweite Drehachse 18 ist ein zweites Drehelement 22 drehbar angeordnet, welches wiederum mit einem weiteren Achsversatz 24 eine dritte Drehachse 25 aufnimmt, um welche ein zweites Basiselement 26 drehbar angeordnet ist. Der weitere Achsversatz 24 entspricht vorteilhafterweise dem ersten Achsversatz 19, und der erste Neigungswinkel 21 zwischen der ersten und zweiten Drehachse 14, 18 entspricht vorteilhafterweise dem zweiten Neigungswinkel 21 zwischen der zweiten und dritten Drehachse 18, 25, so dass die dritte Drehachse 25 kollinear zur ersten Drehachse 14 ausgerichtet ist.

An dem Basiselement 15 ist zur Bildung der ersten Drehachse 14 ein Lager 41 vorgesehen, welches an einer Montageplatte 42 befestigt ist und vorzugsweise von einem Gehäuse 43 umgeben ist. Dieses Lager 41 nimmt drehbar eine Hohlachse 45 auf, an welcher das erste Drehelement 16 befestigt ist. Die Hohlachse 45 wird durch einen nicht näher dargestellten Motor drehbar angetrieben. Dieses erste Drehelement 16 kann als eine Tragstruktur ausgebildet sein, die gekrümmt ausgebildet ist und insbesondere eine pfannenförmige oder parabolspiegelartige Kontur aufweist. Bevorzugt ist die Tragstruktur aus einem steifen und hochfesten Material ausgebildet. Dieses Drehelement 16 kann einen Pfannenkörper 46 mit einer geschlossenen Oberfläche aufnehmen, so dass die darunter liegende Tragstruktur des ersten Drehelementes 16 geschützt ist. An dem ersten Drehelement 16 ist die zweite Drehachse 18 ausgebildet, welche im Aufbau der ersten Drehachse 14 entspricht. Die Hohlachse 45 ist fest am ersten Drehelement 16 angeordnet, so dass das Lager 41 das zweite Drehelement 22 drehbar um die zweite Drehachse 18 rotiert. Zum drehbaren Antrieb ist wiederum ein Motor 44 vorgesehen, um die Verdrehung des zweiten Drehelementes 22 zum ersten Drehelement 16 unabhängig von den weiteren anzusteuernden Drehbewegungen anzusteuern. Das zweite Drehelement 22 weist eine Tragstruktur 47 auf, welche an einer Unterseite eine Abdeckung bzw. einen Kugelsegmentkörper 48 aufnimmt, welcher komplementär zum Pfannenkörper 46 ausgebildet ist. Dabei sind der Pfannenkörper 46 und der Kugelsegmentkörper 48 derart zueinander beabstandet, dass ein dazwischenliegendes Spaltmaß klein gehalten werden kann, um ein Einklemmen oder eine Quetschgefahr von Körpergliedmaßen bei Schwenkbewegungen des zweien Drehelementes 22 zum ersten Drehelement 16 zu verhindern und somit eine konstruktive Sicherheit zu gewährleisten. Zudem kann dadurch auch ein geringer Bauraum im Gesamtaufbau einer solchen Gelenkanordnung geschaffen sein. An dem zweiten Drehelement 22 zur Bildung der dritten Drehachse 25 ist wiederum ein Lager 41 sowie ein Motor 44 fest angeordnet, um die Hohlachse 45 drehbar anzutreiben, an welcher eine Montageplatte 42 des zweiten Basiselementes 26 angeordnet ist.

Die Hohlachsen 45 dienen dazu, nicht näher dargestellte Versorgungsleitungen zur Ansteuerung der einzelnen Motoren 44 hindurchzuführen. Sofern beispielsweise das erste Basiselement 15 auf einem Sockel eines Roboters befestigt ist, in welchem eine Energieversorgung und eine Steuerung vorgesehen ist, kann die Versorgungsleitung von dort aus über die Hohlachsen 45 der ersten Drehachse zum Motor 44 der zweiten Drehachse 18 geführt werden, als auch durch die Hohlachse 45 der zweiten Drehachse 18 zum Motor 44 für die Ansteuerung der Drehbewegung des Basiselementes 25 um die dritte Drehachse 25. Des Weiteren können durch die Hohlachse 45 der dritten Drehachse 25 Versorgungsleitungen hindurchgeführt werden, um weitere an dem zweiten Basiselement 26 befestigte Komponenten, Bewegungsantriebe, Steuerungs- und/oder Recheneinheiten als auch Bedienelemente zu versorgen. Gleiches gilt in umgekehrter Richtung ausgehend von dem zweiten Basiselement 26 zum ersten Basiselement 15.

Bevorzugt ist an einem der beiden Enden der Hohlachse 45 eine Kabelrolle vorgesehen, welche als Speicher ausgebildet ist und eine automatische Auf- und Abwicklung von Versorgungsleitungen in Abhängigkeit der angesteuerten Drehbewegung der Drehelemente 16, 22 bzw. Basiselemente 15, 26 ermöglicht.

Figur 2 zeigt eine kinematische Prinzipdarstellung der Gelenkanordnung 11 gemäß Figur 1, um die Anordnung der Drehachsen 14, 18, 25 und der Achsversätze 19, 24 sowie des Neigungswinkels 21 der Drehachse 18 zur Drehachse 14 bzw. der Drehachse 25 zur Drehachse 18 zu verdeutlichen. Beispielsweise ist die erste Drehachse 14 vertikal ausgerichtet dargestellt. Die zweite Drehachse 18 ist gegenüber der ersten Drehachse 14 um einen Neigungswinkel 21 von beispielsweise 30° geneigt. Gleichzeitig ist die zweite Drehachse 18 um den Achsversatz 19 zur ersten Drehachse 14 beabstandet. Bei einer Rotation des ersten Drehelementes 16 um die erste Drehachse 14 schneidet die zweite Drehachse 18 die erste Drehachse 14 im Schnittpunkt 29. Dieser Schnittpunkt 29 stellt bevorzugt einen Kugelmittelpunkt des als erstes Drehelement 16 ausgebildeten Pfannenkörpers 46 dar. Die dritte Drehachse 25 ist in einer Ausgangsposition deckungsgleich zur ersten Drehachse 14 angeordnet, da der Achsversatz 24 zwischen der zweiten und dritten Drehachse 18, 25 dem Achsversatz zwischen der ersten und zweiten Drehachse 14, 18 entspricht. Bei einer Drehbewegung der zweiten Drehachse 18 rotiert die dritte Drehachse 25 um die zweite Drehachse 18, wobei die dritte Drehachse 25 ebenfalls immer den Schnittpunkt 29 kreuzt. Dadurch kann eine maximale Neigungsposition 31 erzielt werden, welche beispielsweise in Figur 3 oder Figur 5b dargestellt ist. Der Achsversatz 19 zwischen der ersten und zweiten Drehachse 14, 18 als auch der Achsversatz 24 zwischen der zweiten Drehachse 18 und der dritten Drehachse 25 sind dabei quasi aufsummiert, so dass die dritte Drehachse 25 die maximale Neigung zur beispielsweise vertikal ausgerichteten ersten Drehachse 14 bestimmt.

Ausgehend von dem maximalen Neigungswinkel wird der Neigungswinkel 21 zwischen der ersten und zweiten Drehachse 14, 18 durch Halbierung des maximalen Neigungswinkels 21 bestimmt und somit die Drehachsen 14, 18 und 25 zueinander ausgerichtet.

In der in Figur 3 dargestellten Neigeposition ist das zweite Drehelement 22 gegenüber dem ersten Drehelement 16 in einer maximal ausgefahrenen Position dargestellt, welche über das erste Drehelement 16 um 360° drehbar ist. Dadurch wird ein Arbeitsraum für die Gelenkvorrichtung 11 gebildet. Der Schnittpunkt 29 der Drehachsen 14, 18 und/oder 25 liegt außerhalb dieses Arbeitsraumes. Der Schnittpunkt 29 liegt bevorzugt innerhalb eines fiktiven Raumes 49, das heißt, einem projizierten zylindrischen Raum, der sich durch den Außenumfang des ersten Drehelementes 16, insbesondere des Pfannenkörpers 46, ergibt und oberhalb des ersten Drehelementes 16 und außerhalb des Arbeitsraumes der Gelenkanordnung liegt. Dadurch wird eine stabile Lage auch bei Einnahme einer Neigung, beispielsweise eines Oberbaus 35, erzielt.

In Figur 4a ist eine schematische Anordnung eines Roboters 33 dargestellt, welche eine mobile Plattform 34 mit einem dazu bewegbaren Oberbau 35 aufweist, dessen Schwerpunkt 51 dargestellt ist. Handhabungselemente, wie beispielsweise Arme als auch weitere erforderliche Komponenten und/oder Sensoren und/oder Bedienelemente zur Steuerung, wie beispielsweise ein Touchscreen, sind zur Wahrung der Übersichtlichkeit nicht dargestellt. In Figur 4b ist eine schematische Schnittanordnung dargestellt, aus der die Ausrichtung der Gelenkanordnung 11 hervorgeht. Diese ist beispielsweise - wie in Figur 1 dargestellt - eingebaut, das heißt, das Basiselement 15 ist an der mobilen Plattform 34 befestigt.

Das Basiselement 15 kann beispielsweise eine Basisplatte und ein Anschlussflansch sein, welcher an einem Sockel eines Roboters befestigbar ist. Gegenüber liegend kann das zweite Basiselement 26 als Teller, Platte oder Anschlussflansch vorgesehen sein, um einen Oberbau 35 eines Roboters 33 zu tragen.

Alternativ kann eine solche Gelenkanordnung 11 auch für ein Schulter-, Arm-, Knie-, Hand- oder Halsgelenk eingesetzt werden. In Abhängigkeit der anzusteuernden Bewegung wird die Ausrichtung der Gelenkanordnung zwischen den beiden zu verbindenden Komponenten erfolgen.

In den Figuren 5a und 5b ist ein solcher Roboter 33 in einer maximalen Neigungsposition 31 dargestellt. Figur 5b zeigt die Anordnung der Drehachsen 14, 18 und 25, die sich in dem Schnittpunkt 29 schneiden. Daraus wird offensichtlich, dass aufgrund des Achsversatzes 19 zwischen der ersten und zweiten Drehachse 14, 18 eine Schwerpunktverlagerung um das Maß des Achsversatzes 19 gegenüber der ersten Drehachse 14 erfolgt. Der Schwerpunkt 51 liegt beispielsweise im Schnittpunkt 29. Dadurch wird eine erhöhte Standfestigkeit einerseits und ein vergrößerter Neigungswinkel andererseits ermöglicht. Alternativ kann der Schwerpunkt 51 nicht deckungsgleich mit dem Schnittpunkt 29 sein. In einem solchen Fall wandert der Schwerpunkt 51 nahe dem Schnittpunkt 29 um die Achse 14, wobei jedoch weiterhin eine erhöhte Standfestigkeit aufgrund des Schnittpunkts 29 innerhalb des Arbeitsraumes 49 gegeben ist.

Die Gelenkanordnung 11 ermöglicht eine analoge Bewegung eines Kugelgelenkes, jedoch benötigt diese Gelenkanordnung 11 einen geringeren Bauraum. Des Weiteren kann eine Schwerpunktverlagerung bei der Einnahme einer Neigungsposition zur Erhöhung der Standfestigkeit und zur Vergrößerung des Arbeitsbereiches erzielt werden. Zudem bedarf eine solche Anordnung einerseits eines geringen Bauraums und ermöglicht andererseits einen großen Arbeitsraum.

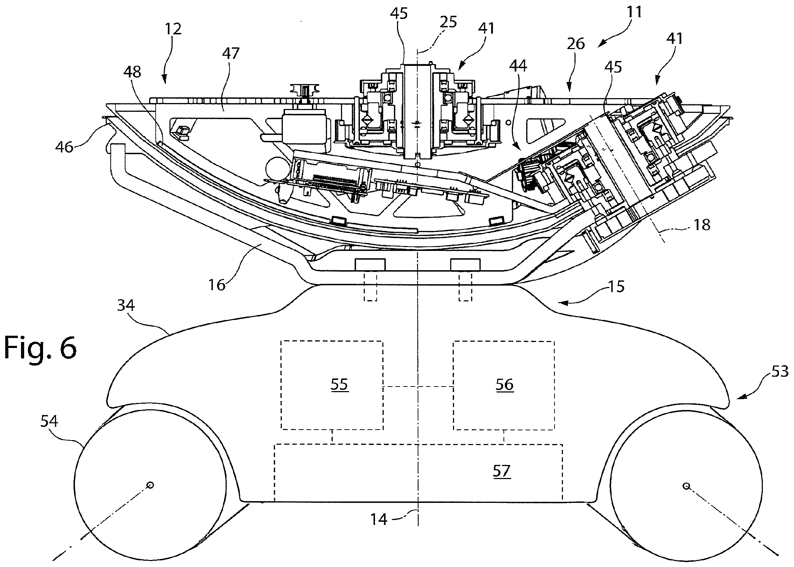

In Figur 6 ist eine schematische Ansicht einer alternativen Ausführungsform der Gelenkanordnung 11 zu Figur 1 dargestellt. Das Basiselement 15 ist als mobile Plattform 34 ausgebildet, wobei das erste Drehelement 16 drehfest auf der mobilen Plattform 34 befestigt ist. Das erste Drehelement 16 kann beispielsweise über eine lösbare Verbindung, insbesondere Schraubverbindung, mit einer Anschlussfläche der mobilen Plattform 34 verbunden sein. Die drehbare Anordnung des Drehelementes 16 zum Basiselement 15 gemäß Figur 1 kann bei dieser Ausführungsform entfallen. Vielmehr umfasst die mobile Plattform 34 ein Fahrwerk 53 mit Rädern 54 oder dergleichen, wodurch die mobile Plattform 34 um ihre eigene Mittelachse drehbar angesteuert werden kann, so dass die Mittelachse der mobilen Plattform 34 die erste Drehachse 14 des ersten Drehelementes 16 bildet. Die mobile Plattform 34 umfasst des Weiteren zumindest einen Motor 56 zur Ansteuerung des Fahrwerkes 53 beziehungsweise der Räder 54. Des Weiteren ist eine Steuerung 55 und eine Datenverarbeitungseinrichtung 55 vorgesehen, um die mobile Plattform 34 und/oder die Gelenkanordnung 11 anzusteuern. Ergänzend können in der mobilen Plattform 34 Akkumulatoren 57 vorgesehen sein, welche zum Antrieb der mobilen Plattform 34 und/oder den Motoren der Gelenkanordnung 11 dienen.

## Patentansprüche

1. Gelenkanordnung mit zumindest einer angetriebenen Achse, insbesondere zur Ansteuerung einer Bewegung einer Komponente eines Roboters,
- bei der ein erstes Basiselement (15) ein erstes Drehelement (16) aufnimmt und das erste Drehelement (16) um eine erste Drehachse (14) drehbar ist,
- bei der das erste Drehelement (16) eine zweite Drehachse (18) getrennt von der ersten Drehachse (14) aufnimmt, um welche ein zweites Drehelement (22) schwenkbar an dem ersten Drehelement (16) ist,
- bei der das zweite Drehelement (22) eine dritte Drehachse (25) getrennt von der zweiten Drehachse (8) aufweist, um welche ein zweites Basiselement (26) zum zweiten Drehelement (22) drehbar ist,
- bei der die zweite Drehachse (18) zur ersten Drehachse (14) einen Achsversatz (19) aufweist und die zweite Drehachse (18) zur ersten Drehachse (14) geneigt ist und
- bei der die erste und zweite Drehachse (14, 18) einen Schnittpunkt (29) aufweist, der außerhalb der Gelenkanordnung (11) liegt, **dadurch gekennzeichnet, dass** das erste Drehelement (16) als Pfannenkörper (46) und das zweite Drehelement (22) als Kugelsegmentkörper (48) ausgebildet ist, dessen Radius auf den des Pfannenkörpers (46) unter Bildung eines Spaltes angepasst ist.

2. Gelenkanordnung nach Anspruch 1, **dadurch gekennzeichnet, dass** durch die drehbare Anordnung des zweiten Drehelementes (22) zum ersten Drehelement (16) ein Arbeitsraum gebildet ist, innerhalb dem die Drehbewegungen des ersten und zweiten Drehelementes (16, 22) liegen und der Schnittpunkt (29) der Drehachsen (14, 18) des ersten und zweiten Drehelementes (16, 22) außerhalb dieses Arbeitsraumes liegt.

3. Gelenkanordnung nach Anspruch 1, **dadurch gekennzeichnet, dass** ein weiterer Achsversatz (24) zwischen der zweiten Drehachse (18) und der dritten Drehachse (25) kleiner oder größer als der Achsversatz (19) zwischen der ersten und der zweiten Drehachse (14, 18) ist und vorzugsweise der Neigungswinkel (21) zwischen der ersten Drehachse (14) und der zweiten Drehachse (18) gleich dem Neigungswinkel (21) der zweiten Drehachse (18) zur dritten Drehachse (25) ist.

4. Gelenkanordnung nach Anspruch 1, **dadurch gekennzeichnet, dass** ein weiterer Achsversatz (24) zwischen der zweiten Drehachse (18) und der dritten Drehachse (25) dem Achsversatz (19) zwischen der ersten und zweiten Drehachse (14, 18) entspricht und vorzugsweise der Neigungswinkel (21) zwischen der ersten Drehachse (14) und der zweiten Drehachse (18) gleich dem Neigungswinkel (21) der zweiten Drehachse (18) zur dritten Drehachse (25) ist.

5. Gelenkanordnung nach Anspruch 1, **dadurch gekennzeichnet, dass** jede Drehachse (14, 18, 25) durch einen separaten Motor angetrieben ist.

6. Gelenkanordnung nach Anspruch 1, **dadurch gekennzeichnet, dass** für jede Drehachse (14, 18, 25) eine Drehbewegung aus einer Nullposition heraus um einen Winkel von +/- 360° oder weniger ansteuerbar ist.

7. Gelenkanordnung nach Anspruch 1, **dadurch gekennzeichnet, dass** in den Drehachsen (14, 18, 25) Schleifringe vorgesehen sind, durch welche die Drehbarkeit der Drehelemente (16, 22) und Basiselemente (15, 26) ansteuerbar ist.

8. Gelenkanordnung nach Anspruch 1, **dadurch gekennzeichnet, dass** eine jeweilige Drehposition der Drehelemente (16, 22) und des zumindest einen Basiselements (15, 26) mit einem Sensor, insbesondere einem Absolutwertgeber, erfasst sind.

9. Gelenkanordnung nach Anspruch 1, **dadurch gekennzeichnet, dass** das erste Basiselement (15) und das zweite Basiselement (26) als eine Grundplatte oder ein Anschlussflansch ausgebildet sind.

10. Gelenkanordnung nach Anspruch 1, **dadurch gekennzeichnet, dass** die Drehachse (14, 18, 25) als Hohlachse ausgebildet ist, die als Kabeldurchführung dient.

11. Gelenkanordnung nach Anspruch 1, **dadurch gekennzeichnet, dass** an dem zweiten Basiselement (26) ein Oberbau (35) angeordnet ist und ein Schwerpunkt (51) des Oberbaus (35) im Schnittpunkt (29) der ersten und zweiten Drehachse (14, 18) liegt.

12. Gelenkanordnung nach Anspruch 1, **dadurch gekennzeichnet, dass** das erste Basiselement (15) als eine Montageplatte (42) ausgebildet ist und einen Motor (44) umfasst, welcher das erste Drehelement (16), das mit einem Lager (41) zur Montageplatte (42) drehbar gelagert ist, antreibt.

13. Gelenkanordnung nach Anspruch 1, **dadurch gekennzeichnet, dass** das erste Basiselement (15) als eine mobile Plattform (34) ausgebildet ist, an welcher das erste Drehelement (16) feststehend angeordnet ist.

14. Gelenkanordnung nach Anspruch 13, **dadurch gekennzeichnet, dass** die mobile Plattform (34) zumindest ein Fahrwerk (53) aufweist, welches mit einem Motor (56) verfahrbar angetrieben ist und Akkumulatoren (57) für die Motoren der Drehachsen (14, 18, 25) und den Motor (56) des Fahrwerks (53) aufweist.

## Claims

1. Joint arrangement having at least one driven axis, in particular for activating a movement of a component of a robot, comprising:
- a first base element (15) incorporates a first rotation element (16) and the first rotation element (16) is rotatable about a first rotation axis (14),
- the first rotation element (16) incorporates a second rotation axis (18) separate from the first rotation axis (14), about which a second rotation element (22) is swivellable on the first rotation element (16),
- the second rotation element (22) has a third rotation axis (25) separate from the second rotation axis (8) about which a second base element (26) is rotatable with respect to the second rotation element (22),
- the second rotation axis (18) has an axial offset (19) relative to the first rotation axis (14) and the second rotation axis (18) is inclined relative to the first rotation axis (14) and
- the first and the second rotation axis (14, 18) have an intersection point (29) which lies outside the joint arrangement (11), **characterised in that** the first rotation element (16) is formed as a pan body (46) and the second rotation element (22) as a sphere segment body (48), the radius of which being adjusted to that of the pan body (46) to form a gap.

2. Joint arrangement according to claim 1, **characterised in that** a work space is formed by the rotatable arrangement of the second rotation element (22) relative to the first rotation element (16), the rotation movements of the first and second rotation elements (16, 22) lying within said work space and the intersection point (29) of the rotation axes (14, 18) of the first and second rotation element (16, 22) lying outside this work space.

3. Joint arrangement according to claim 1, **characterised in that** a further axial offset (24) between the second rotation axis (18) and the third rotation axis (25) is smaller or larger than the axial offset (19) between the first and the second rotation axis (14, 18) and the inclination angle (21) between the first rotation axis (14) and the second rotation axis (18) is preferably the same as the inclination angle (21) of the second rotation axis (18) relative to the third rotation axis (25).

4. Joint arrangement according to claim 1, **characterised in that** a further axial offset (24) between the second rotation axis (18) and the third rotation axis (25) corresponds to the axial offset (19) between the first and second rotation axis (14, 18) and the inclination angle (21) between the first rotation axis (14) and the second rotation axis (18) is preferably the same as the inclination angle (21) of the second rotation axis (18) relative to the third rotation axis (25).

5. Joint arrangement according to claim 1, **characterised in that** each rotation axis (14, 18, 25) is driven by a separate motor.

6. Joint arrangement according to claim 1, **characterised in that**, for each rotation axis (14, 18, 25), a rotation movement from a zero position about an angle of +/- 360° or fewer is activatable.

7. Joint arrangement according to claim 1, **characterised in that** abrasive rings are provided in the rotation axes (14, 18, 25), by means of which abrasive rings the rotatability of the rotation elements (16, 22) and base elements (15, 26) is activatable.

8. Joint arrangement according to claim 1, **characterised in that** a respective rotation position of the rotation elements (16, 22) and of the at least one base element (15, 26) are recorded by a sensor, in particular an absolute value transmitter.

9. Joint arrangement according to claim 1, **characterised in that** the first base element (15) and the second base element (26) are formed as a base plate or connecting flange.

10. Joint arrangement according to claim 1, **characterised in that** the rotation axis (14, 18, 25) is formed as a hollow axis which serves as a cable bushing.

11. Joint arrangement according to claim 1, **characterised in that** a superstructure (35) is arranged on the second base element (26) and a centre of gravity (51) of the superstructure (35) lies in the intersection point (29) of the first and second rotation axis (14, 18).

12. Joint arrangement according to claim 1, **characterised in that** the first base element (15) is formed as a mounting plate (42) and comprises a motor (44) which drives the first rotation element (16) that is mounted for rotation by a bearing (41) relative to the mounting plate (42).

13. Joint arrangement according to claim 1, **characterised in that** the first base element (15) is formed as a mobile platform (34) on which the first rotation element (16) is fixedly arranged.

14. Joint arrangement according to claim 13, **characterised in that** the mobile platform (34) has at least one chassis (53) which is driven able to be moved by a motor (56) and has accumulators (57) for the motors of the rotation axes (14, 18, 25) and the motor (56) of the chassis (53).

## Revendications

1. Système articulé pourvu d'au moins un axe entraîné, en particulier en vue d'activer un mouvement d'un composant donné d'un robot,
- dans lequel un premier élément de base (15) reçoit un premier élément rotatif (16) et ledit premier élément rotatif (16) peut tourner autour d'un premier axe de rotation (14),
- dans lequel le premier élément rotatif (16) reçoit, de manière séparée du premier axe de rotation (14), un deuxième axe de rotation (18) autour duquel un deuxième élément rotatif (22) peut pivoter au niveau du premier élément rotatif (16),
- dans lequel le deuxième élément rotatif (22) reçoit, de manière séparée du deuxième axe de rotation (8), un troisième axe de rotation (25) autour duquel un deuxième élément de base (26) peut tourner par rapport au deuxième élément rotatif (22),
- dans lequel le deuxième axe de rotation (18) présente un décalage axial (19) par rapport au premier axe de rotation (14) et le deuxième axe de rotation (18) est incliné par rapport au premier axe de rotation (14) et
- dans lequel le premier et le deuxième axe de rotation (14, 18) présentent un point d'intersection (29) qui est situé à l'extérieur du système articulé (11),**caractérisé en ce que** le premier élément rotatif (16) est réalisé en tant que corps en forme de coupelle (46) et le deuxième élément rotatif (22) est réalisé en tant que corps en forme de segment sphérique (48) dont le rayon est adapté à celui du corps en forme de coupelle (46) en formant un interstice donné.

2. Système articulé selon la revendication 1, **caractérisé en ce que** le fait que le deuxième élément rotatif (22) soit disposé de manière à pouvoir tourner par rapport au premier élément rotatif (16) permet de former un espace de travail à l'intérieur duquel se situent les mouvements de rotation du premier et du deuxième élément rotatif (16, 22), et **en ce que** le point d'intersection (29) des axes de rotation (14, 18) du premier et du deuxième élément rotatif (16, 22) se situe à l'extérieur dudit espace de travail.

3. Système articulé selon la revendication 1, **caractérisé en ce qu'**un autre décalage axial (24) entre le deuxième axe de rotation (18) et le troisième axe de rotation (25) est inférieur ou supérieur au décalage axial (19) entre le premier et le deuxième axe de rotation (14, 18), et **en ce que** l'angle d'inclinaison (21) entre le premier axe de rotation (14) et le deuxième axe de rotation (18) est de préférence égal à l'angle d'inclinaison (21) du deuxième axe de rotation (18) par rapport au troisième axe de rotation (25).

4. Système articulé selon la revendication 1, **caractérisé en ce qu'**un autre décalage axial (24) entre le deuxième axe de rotation (18) et le troisième axe de rotation (25) correspond au décalage axial (19) entre le premier et le deuxième axe de rotation (14, 18), et **en ce que** l'angle d'inclinaison (21) entre le premier axe de rotation (14) et le deuxième axe de rotation (18) est de préférence égal à l'angle d'inclinaison (21) du deuxième axe de rotation (18) par rapport au troisième axe de rotation (25).

5. Système articulé selon la revendication 1, **caractérisé en ce que** chaque axe de rotation (14, 18, 25) est entraîné par un moteur séparé.

6. Système articulé selon la revendication 1, **caractérisé en ce qu'**il est possible, pour chaque axe de rotation (14, 18, 25), d'activer, à partir d'une position zéro, un mouvement rotatif couvrant un angle de +/- 360° ou moins.

7. Système articulé selon la revendication 1, **caractérisé en ce que** dans les axes de rotation (14, 18, 25) sont prévues des bagues collectrices grâce auxquelles il est possible d'activer la rotation des éléments rotatifs (16, 22) et des éléments de base (15, 26).

8. Système articulé selon la revendication 1, **caractérisé en ce qu'**une position de rotation respective des éléments rotatifs (16, 22) et dudit au moins un élément de base (15, 26) est saisie par un capteur, en particulier un codeur rotatif absolu.

9. Système articulé selon la revendication 1, **caractérisé en ce que** le premier élément de base (15) et le deuxième élément de base (26) sont réalisés sous la forme d'une plaque de base ou d'une bride de raccordement.

10. Système articulé selon la revendication 1, **caractérisé en ce que** l'axe de rotation (14, 18, 25) est réalisé en tant qu'axe creux servant à la traversée de câbles.

11. Système articulé selon la revendication 1, **caractérisé en ce qu'**une superstructure (35) est disposée sur le deuxième élément de base (26) et qu'un centre de gravité (51) de ladite superstructure (35) se situe au point d'intersection (29) du premier et du deuxième axe de rotation (14, 18).

12. Système articulé selon la revendication 1, **caractérisé en ce que** le premier élément de base (15) est réalisé sous la forme d'une plaque de montage (42) et comprend un moteur (44) qui entraîne le premier élément rotatif (16) qui est logé de manière à tourner (41) par rapport à la plaque de montage (42) à l'aide d'un palier.

13. Système articulé selon la revendication 1, **caractérisé en ce que** le premier élément de base (15) est réalisé sous la forme d'une plateforme mobile (34) au niveau de laquelle le premier élément rotatif (16) est disposé de manière fixe.

14. Système articulé selon la revendication 13, **caractérisé en ce que** la plateforme mobile (34) présente au moins un train de roulement (53) qui est entraîné par un moteur (56) de manière à pouvoir être déplacé et présente des accumulateurs (57) pour les moteurs des axes de rotation (14, 18, 25) et le moteur (56) du train de roulement (53).
